# EUROPEAN PATENT SPECIFICATION

(11) **EP 2 789 980 B1**
(45) Date of publication and mention of the grant of the patent: **30.01.2019**
(21) Application number: 14163166.3
(22) Date of filing: 02.04.2014
(51) Int. Cl.: G01C 21/34, G01C 21/36, G07C 7/00

(54) **Planning of driving and driving interruptions based on points of interest**
Fahr- und Fahrunterbrechungsplanung auf Grundlage von Interessenpunkten
Planification d'itinéraire et d'interruptions d'itinéraire sur la base de points d'intérêt

(30) Priority: 08.04.2013 SE 1350434
(43) Date of publication of application: 15.10.2014
(73) Proprietor: Scania CV AB (publ), 151 87 Södertälje (SE)
(72) Inventor: Norberg, Jonas, SE-151 39 SÖDERTÄLJE (SE); Aho Tarkka, Adeliina, SE-115 30 STOCKHOLM (SE); Fagerberg, Kalle, SE-120 62 STOCKHOLM (SE); Johansson, Jonny, SE-147 71 GRÖDINGE (SE); Wikman, Anders, SE-132 35 SALTSJÖ BOO (SE)
(74) Representative: Scania CV AB

(56) References cited:
- EP-A1- 2 533 013
- DE-A1- 19 933 345
- US-A1- 2007 010 942
- US-B1- 6 807 481

## Description

### TECHNICAL AREA

The invention relates to a method and a navigation unit in a vehicle. To be more precise, the invention concerns the planning of interruptions in driving at a point of interest along the route of the vehicle.

### BACKGROUND

There are regulations when driving certain vehicles with respect to the maximum permitted duration of driving since the most recent interruption in driving, the amount of sleep per 24-hour period, and similar. These regulations may be different in different countries or regions, and they may differ between different types of vehicle. One example of such a regulated duration of driving is that the driver is allowed to drive the vehicle for four hours and 30 minutes, and must subsequently take a rest of 45 minutes.

This means that the driver, when the maximum permitted duration of driving has been reached since the most recent interruption in driving, is compelled to stop for rest during the stipulated period.

The duration of driving is often monitored by a time-mileage recorder. This can record continuously the speed and the periods of driving and rest, and it can also calculate the remaining permitted duration of driving until the subsequent interruption in driving for the driver. Certain time-mileage recorders comprise a computer memory in the time-mileage recorder together with a driver card in the form of a smartcard. This is sometimes referred to as a "digital time-mileage recorder".

Exceeding the regulated duration of driving is punishable by law, and may result in fines. Furthermore, authorities have the right to inspect the vehicle recorder and can levy fines on the driver at a later date, if it becomes apparent that any aspect of the regulations has been broken by the driver.

The term "vehicle" is used in this context to denote, for example, lorries, articulated lorries, open-back trucks, transport vehicles, work trucks, pick-up vehicles, working vehicles, cars, emergency vehicles, vessels, vans, four-wheel drive vehicles, cars, tank vehicles, motorbikes, , mopeds, scooters, limousines, sports cars, radio-equipped cars, terrain-going vehicles, tracked vehicles, tractors, buses, amphibious vehicles, boats, ferries, ocean-going cruisers, submarines, airplanes, helicopters and other similar motor-driven manned transport means, adapted for geographical displacement by land, sea or air.

One problem for the driver is to plan the route such that the location at which the regulatory rest must be taken is in accordance with the needs or desires that the driver, or the vehicle, may have, such as, for example, a fuel station or a restaurant. The problem is particularly noticeable when the driver is driving along a route with which he or she is essentially unfamiliar.

While it is true that the driver can often estimate from experience how long a distance can be driven during the permitted duration of driving, this may be changed during the journey due to traffic conditions, weather, technical problems with the vehicle or other similar cause that lies outside of the control and knowledge of the driver when making the estimate.

This may lead to the driver being compelled to take a rest at short notice by stopping the vehicle at, for example, a lay-by along the road when the permitted duration of driving expires in order to avoid fines, only to stop again, possibly, shortly afterwards, when the journey has been resumed, to purchase fuel or eat lunch when a fuel station or restaurant is passed.

In addition to the loss of time that is incurred, and possibly also the rather uninspiring surroundings that the driver experiences during the rest at short notice, this may also lead to safety risks, since a lorry parked alongside the road may, for example, obstruct the sight of other road users, or it may cause a dangerous situation when driving into our out from the carriageway shoulder.

If the driver, in order to avoid this, stops for safety reasons at a restaurant after, for example, driving for three hours and 15 minutes after the most recent interruption in driving, it is, if course, true that the situation described above of having to take a rest at short notice is avoided, but this instead leads to an underexploitation of the vehicle relative to the available driving time, which may be expensive and lead to late delivery.

DE19933345A1 discloses a method that employs a unit to provide compass bearings, a distance travelled sensor and a GPS receiver providing information to a control system. A visual display guides the driver to the destination entered in at a keyboard. Map information, including information on service station locations, is stored in a RAM store. In plotting the route these are included to ensure the driver rests at suitable intervals and device for determining the probability of an accident for a vehicle. The probability of accident of a car is determined in dependence on a location signal generated by car location implement, supported by satellite. The signal determines the car location and car data. Preferably the car acceleration, its velocity and/or slip angle and/or one or more ESP signal are used as car data. A signal of an additional sensor, e.g. rain sensor, may be used.

US2007/010942A1 discloses a method and system for suggesting an intermediate point-of-interest (POI) for a user that is traveling. A series of locations of a ground-based vehicle is received. At least some of the locations are related to at least one travel pattern. A route is identified based on relating at least some of the received locations to at least one travel patterns and an intermediate point-of-interest is identified responsive to a predicted interest of a user based on the route.

US6807481B1 discloses a logging and compliance computer system for use by drivers in meeting regulation when driving a vehicle containing a cargo. The system identifies the driver and retrieves a data record for that driver containing the driver's history of recent driving. The system accepts a destination, equipment safety report, and cargo description from the driver. The system plots a route to the destination considering the equipment safety report, the cargo description, the driver history, and regulations governing the driver operating the vehicle and transporting the cargo. The driver is allowed to drive if permissible under the regulations considering the driver's history while the system times the driving and regularly updates the data record. When the driver is no longer permitted to drive, the system warns the driver to rest. Following a rest period, when driving is again permissible under the regulations, the driver is alerted to continue to the destination.

EP2533013A1 discloses a method pertaining to route planning for a vehicle, comprising reading in location information comprising the route's starting point and final destination, reading in time information comprising starting time and/or desired time of arrival at final destination, reading in road information about sections of road between starting point and final destination, reading in vehicle-specific information. The method further comprises reading in driving time information comprising driving and rest times during a driving shift as prescribed by the regulations for a driver's driving times, calculating an optimum route for the vehicle on the basis of said information read in, and presenting driving instructions to the driver for following the calculated route.

We can conclude that much remains to be done in order to facilitate the route planning for a vehicle.

### SUMMARY

It is therefore one purpose of the present invention to make possible the planning of interruptions in driving for the vehicle and interruptions for service of the vehicle, in order to solve at least one of the problems described above, and in this way achieve an improvement in vehicles.

The present invention provides a method according to claim 1 and a navigation unit according to claim 5. In addition, optional features of the present invention are set out in the dependent claims.

By giving the navigation unit access to information about the durations of driving of the driver, and by calculating, for example, the time that remains before an interruption in driving such as refreshment or rest, the navigation unit can generate suggestions for points of interest at which to take the next interruption in driving. This can be carried out by the navigation unit being able to calculate the distance that the driver can manage to drive during the remaining permitted duration of driving before an interruption in driving, and by collecting desires from the driver or the vehicle owner, or from the driver and the vehicle owner, with respect to the range of services available at the points of interest at which interruptions in driving are suggested. When the driver selects a suggested point of interest, this can be entered as an intermediate goal in the navigation unit. The planning by the driver of the route can in this way be improved, stops of the vehicle at short notice can be avoided, and regulatory interruptions in driving can be placed not only such that the permitted duration of driving can be exploited in an optimal, or at least in an improved manner, but also such that the driver or the vehicle, or the driver and the vehicle, are given access to a location for an interruption that has the level of service that is required. An improvement in vehicles is in this way achieved.

Other advantages and further new distinctive features will be made clear by the following detailed description of the invention.

### BRIEF DESCRIPTION OF DRAWINGS

The invention will now be described in further detail with reference to the attached drawings, which illustrate embodiments of the invention:
- **Figure 1A**: is an illustration of a vehicle according to one embodiment.
- **Figure 1B**: is an illustration of a vehicle according to one embodiment.
- **Figure 2A**: is a summary illustration that shows route planning according to one embodiment of the invention.
- **Figure 2B**: is a summary illustration that shows route planning according to one embodiment of the invention.
- **Figure 2C**: is a summary illustration that shows route planning according to one embodiment of the invention.
- **Figure 3**: is a combined signal and flow diagram that illustrates one embodiment of the invention.
- **Figure 4**: is a flow diagram that illustrates one embodiment of the invention.
- **Figure 5**: is an illustration of a system for route planning, according to one embodiment of the invention.

### DETAILED DESCRIPTION OF THE INVENTION

The invention is defined as a method and a navigation unit for the planning of interruptions in driving for the driver of a vehicle, and these can be realised in any one of the embodiments described below. This invention can, however, be executed in many different forms and it is not to be considered to be limited by the embodiments described here: These embodiments are instead intended to illuminate and illustrate various aspects of the invention.

Further aspects and distinctive features of the invention may be made apparent by the following detailed description when it is reviewed in correlation with the attached drawings. The drawings, however, are to be regarded only as examples of the various embodiments of the invention and are not to be regarded as limiting for the invention, which is limited solely by the attached patent claims. Furthermore, the drawings are not necessarily drawn to scale and are, unless otherwise explicitly stated, intended to illustrate aspects of the invention conceptually.

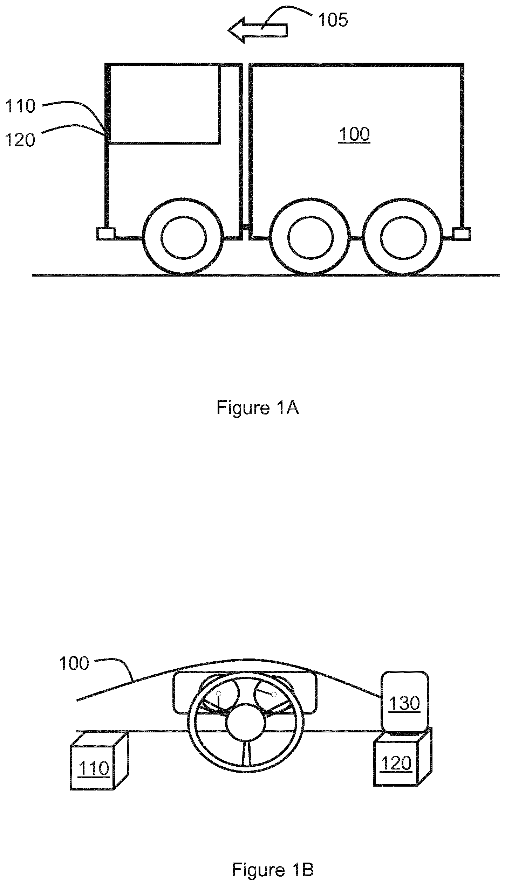

**Figure 1A** shows a vehicle **100** that is being driven in one direction of travel **105.** Inside the vehicle 100, for example inside the driver's cabin, is a unit **110** that calculates the duration of driving and a navigation unit **120.** The unit 110 that calculates the duration of driving is constituted by a time-mileage recorder. Such a time-mileage recorder may be analogue or digital, according to different embodiments.

The navigation unit 120 may, according to certain embodiments, be fixed mounted in the vehicle 100 or it may be removeable and mountable in the vehicle 100, in, for example, the driver's cabin. The navigation unit 120 may also be constituted by a portable unit. Such a portable unit may be constituted by, for example, the mobile telephone of the driver, a computer, a tablet computer, or a similar portable arrangement according to certain embodiments.

**Figure 1B** illustrates one example of the driver's surroundings in the vehicle 100. The unit 110 that calculates the duration of driving is present in the vehicle, as is also the navigation unit 120, which comprises or is connected to a display **130.** The unit 110 that calculates the duration of driving and the navigation unit 120 are arranged to communicate with each other; at least to the extent that the navigation unit 120 is arranged to receive a signal representing information from the unit that calculates the duration of driving 110. This information may comprise, for example, at least one of how long the driver has driven since the most recent interruption in driving and how long the driver has remaining until the next interruption in driving. Based on this information, the navigation unit 120 can determine a geographical region that it is possible for the vehicle 100 to reach during the calculated remaining permitted duration of driving. An interruption in driving can in this way be planned such that it is in accordance with the durations of driving and rests of the driver according to the requirements of at least one of authorities, industry bodies, employer policies, and similar.

The term "interruption in driving" is used in this context to denote, for example, a break or a rest of, for example, 45 minutes, as a consequence of the vehicle 100 having been driven by the same driver during a certain period of time, for example four hours and 30 minutes The term "interruption in driving" is used to denote also rest as a consequence of the driver having driven the vehicle 100 for a certain period of time during a certain 24-hour period, for example nine hours, or a maximum of 10 hours a day, twice a week. The term "interruption in driving" is used to denote also a weekly rest as a consequence of the driver having driven the vehicle 100 during a certain period of time during a week. The concept of "interruption in driving", however, can denote also that the driver is compelled to interrupt the driving of the vehicle during a different interval of time that may be, for example, implemented by the employer for reasons of, for example, safety, for example a stop of 10 minutes every second hour, in addition to a stop of 45 minutes after four hours and 30 minutes, etc.

Furthermore, the concept of "interruption in driving" comprises, and this is possibly most relevant when the vehicle 100 has more than one driver, also a temporary stop of the vehicle 100 in order to make it possible to change drivers, when the calculated duration of driving of the relevant driver has ended.

When the driving of the vehicle 100 starts, the driver must start or continue the driver's log in the unit 110 that calculates the duration of driving by, for example, inserting his or her driver card or corresponding item into the unit 110 that calculates the duration of driving. This is necessary due to legal requirements with respect to driver's logs in many countries, as has been mentioned above in the description of background.

One advantage of allowing the navigation unit 120 to obtain access to the unit 110 that calculates the duration of driving, and the information that is present in it with respect to the duration of driving of the driver is, particularly in the case in which the unit 110 that calculates the duration of driving is constituted by the time-mileage recorder of the vehicle, that the existing equipment of the vehicle 100 is, at least partially, exploited, and this ensures that the invention is cheap to implement, since the time-mileage recorder, driver's log and driver card (or corresponding item) must be present anyway in vehicles 100 of a certain type.

In addition, the calculation of the elapsed duration of driving of the driver that is carried out in the unit that calculates the duration of driving, in particular when this comprises a time-mileage recorder, can be regarded as reliable, since manipulation of this calculation is illegal, which probably deters many people from trying to influence or manipulate the calculation of the duration of driving.

The navigation unit 120 has access also to information in order to plan a route for the vehicle 100, such as, for example, map information, previous destinations, properties (such as the load classification, type of road, speed limit, etc.) of various sections of road, points of interest (also known as "POIs"), and information about the vehicle that has been previously stored or configured by the driver of the vehicle (or that has, alternatively, been read from detectors or sensors) such as the weight, height, length, width, axle load, the presence of a coupled trailer, hazardous goods, loose goods in the load compartment, and similar.

It is possible in this way to avoid roads on which certain vehicles 100, such as, for example, lorries are not permitted; narrow streets, and low bridges and tunnels. The points of interest (also known as "POIs") may comprise, for example, fuel stations, shops with extended opening hours, lorry-washing facilities and other locations, including such locations as the driver himself or herself has for various reasons entered into the navigation unit 120 on an earlier occasion.

Furthermore, an input arrangement can be connected to the navigation unit 120 by a wired or wireless interface. The driver can give through the input arrangement his or her preferences with respect to points of interest where interruptions in driving are planned, for example, access to a restaurant of a particular type or other services.

The navigation unit 120 is further arranged to match desires of the driver with respect to points of interest for interruptions in driving with the points of interest that have been determined to lie within the determined geographical region.

It is in this way possible that an interruption in driving is planned at a point of interest that is in accordance with the collected desires, at a time at which the permitted remaining duration of driving of the driver is starting to come to an end. The driver can in this way optimise the duration of driving, while at the same time finding points of interest that are compatible with the desires that the driver has.

The unit 110 that calculates the duration of driving and the navigation unit 120 can communicate with each other over a wired or a wireless interface.

The wired interface may, for example, be based on any one of the following technologies in the vehicle 100: Controller Area Network (CAN), Media Oriented Systems Transport (MOST), Ethernet. According to certain embodiments, the wired interface may, for example, be based on any one of the following technologies: Ethernet, Universal Serial Bus (USB), Serial RS232, FireWire, Thunderbolt, just to mention some of the possibilities.

The wireless interface may, for example, be based on any one of the following technologies: Global System for Mobile Communications (GSM), Enhanced Data Rates for GSM Evolution (EDGE), Universal Mobile Telecommunications System (UMTS), Code Division Access (CDMA), (CDMA 2000), Time Division Synchronous CDMA (TD-SCDMA), Long Term Evolution (LTE); Wireless Fidelity (Wi-Fi), as defined by at least one of the Institute of Electrical and Electronics Engineers (IEEE) standards 802.11 a, ac, b, g and n, Internet Protocol (IP), Bluetooth, and Near Field Communication, (NFC), according to different embodiments.

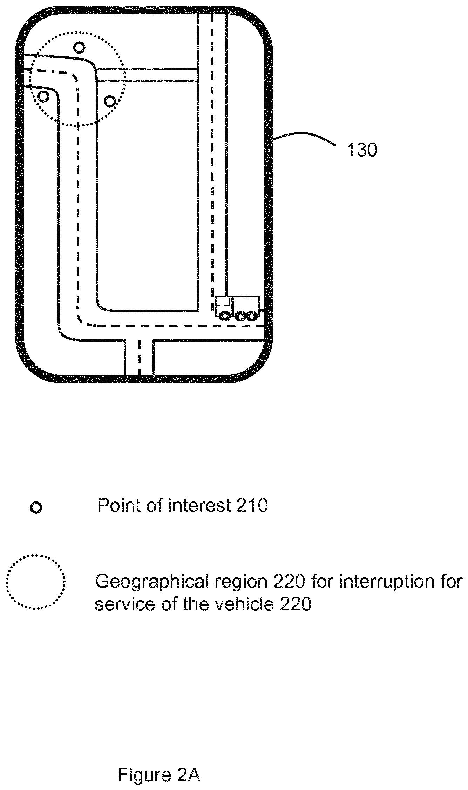

**Figure 2A** shows a schematic example of the planning of interruptions in driving for a vehicle at a point of interest **210,** visualised on a display 130. A dashed circle specifies the geographical region **220** that the navigation unit 120 calculates that the vehicle 100 can reach within the remaining permitted duration of driving for the driver.

During the calculation of the geographical region 220 that the vehicle 100 can reach within the remaining duration of driving, the navigation unit 120 may in certain embodiments consider whether the section of road is subject to traffic jams, for example during rush hour, planned openings of bridges, railway crossings, and similar. Also factors such as speed limits, roadworks, traffic lights, roundabouts and other obstacles on the road can in certain embodiments be included in a calculation of the estimated remaining distance, as also visibility conditions such as the presence of fog, rain, darkness, and road surface conditions such as slippery roads. A route for the vehicle 100 during the remaining duration of driving can in this way be estimated in certain embodiments, this route being as close to the route that is achieved in reality as possible.

Also other parameters that may be related to the route or interruptions in driving can be illustrated in certain embodiments.

The navigation unit 120 calculates and selects points of interest 210 within the geographical region 220 and also display this for the driver on the display 130. The example illustrated shows three alternative points of interest 210 that are suitable at subsequent interruptions in driving since they all are in accordance with the desire. This is, however, only one example according to one embodiment. According to other embodiments, a different number of alternative points of interest 210 may be displayed, including the number zero, if no point of interest that is in accordance with the desire has been discovered within the geographical region 220.

In certain examples, it is possible, when no point of interest has been discovered within the geographical region 220 that is in accordance with the said desires that the most recent point of interest 210 that is in accordance with the desire is displayed, before the duration of driving is calculated to end.

The driver is given the opportunity to compare the different suggested points of interest 210 with each other and to choose one of them for an interruption in driving, the one that is in best accordance with the desire that has been posed.

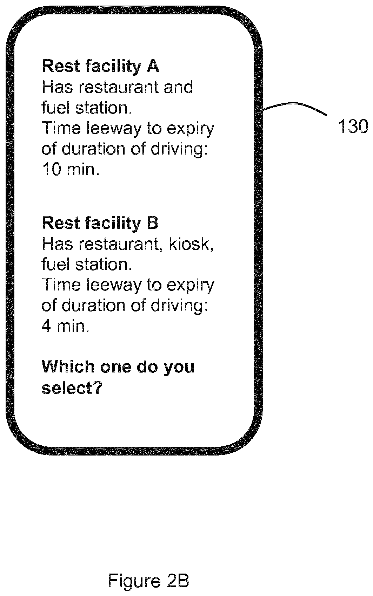

**Figure 2B** shows a schematic example of the planning of interruptions in driving for a vehicle 100, visualised on a display 130 in association with the navigation unit 120.

Information is shown in this example with respect to two alternative rest facilities, A and B, and the display shows the range of services available at these, together with the time leeway that the driver has to the interruption in driving.

The driver can subsequently choose one of these rest facilities and enter this rest facility into the navigation unit 120 as an intermediate goal.

By showing the calculated time leeway and range of services available at each of the alternative rest facilities, the driver is given a better basis on which to make a decision to determine himself or herself which is best, depending on factors that the driver, but possibly not necessarily the navigation unit 120, knows about.

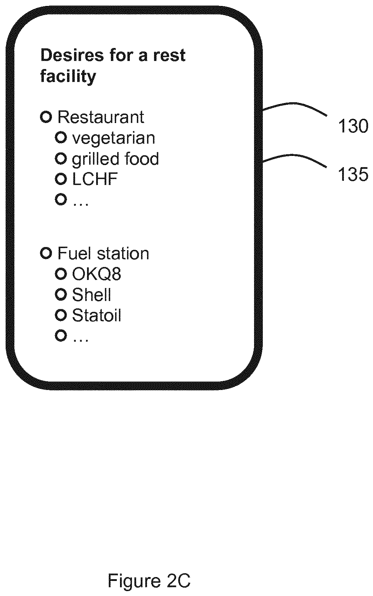

**Figure 2C** shows a schematic example of the planning of interruptions for service of a vehicle 100, visualised on a display 130 in association with the navigation unit 120.

In the example that is illustrated, the display 130 is constituted by a touch-sensitive screen and it functions, therefore, also as input arrangement 135. This is, however, only an example. According to other embodiments, the display 130 and the input arrangement 135 are separate units, whereby the input arrangement 135 can be constituted by, for example, a keyboard, a button pad, a pointing device, or similar arrangement.

Figure 2B illustrates in an example how different alternative desires for the next rest facility, or for all future rest facilities, can be presented to the driver.

The driver is given the opportunity to choose among different alternative desires. In certain embodiments, the driver can specify desires in a free-text field, for example, or from a list of putative desires.

According to certain embodiments, desires can be entered in advance, not necessarily by the driver. The owner of the vehicle, for example, or a representative of the owner, may enter the desire that only certain fuel stations from a specific chain for which the owner possesses a discount card or equivalent are to be displayed in the navigation system or on the display 130.

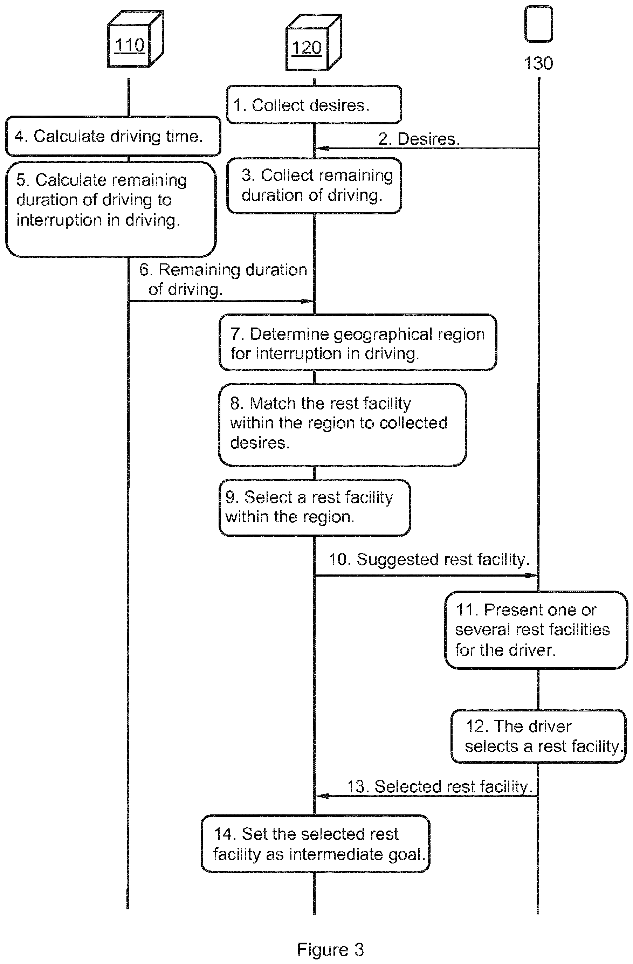

**Figure 3** shows an example of how an interruption in driving can be planned in a navigation unit 120, at a point of interest 210 that matches a desire. The combined flow and signal diagram in Figure 3 illustrates a method that comprises fourteen steps for the planning of interruptions in driving for the driver of a vehicle 100. It should, however, be observed that the steps 1-14 described can be carried out in a somewhat different chronological order than that suggested by the numbering, and that certain of the steps can be carried out in parallel with each other, according to different embodiments. Furthermore, all of the described steps 1-14 do not necessarily occur in all embodiments.

In a first step, desires from, for example, the driver of the vehicle related to the point of interest at which the nest interruption in driving or interruption for service of the vehicle is planned are collected. Such desires may comprise, for example, a restaurant, café, pizzeria, salad bar, fuel station, shop, kiosk, vehicle repair workshop, lorry-washing facility, toilet, urinal, library, view of great natural beauty, position of low traffic volume (in order to facilitate relaxation, rest or sleep), a lake for swimming in (which may be most relevant during the summer period), a swimming pool, gym, access to trees (for the temporary installation of a hammock, this may require that the Right of Public Access applies to the tree in question), internet connection by broadband, for example, WiFi, and access to pressurised air for correcting the air pressure in tyres, the opportunity to refill windscreen washing fluid, radiator fluid, urea and oil, to exchange windscreen wiper blades or to carry out similar service measures on the vehicle 100, or resting measures for its driver.

In certain embodiments, such desires can be collected from an input unit 135 and sent to the navigation unit 120 in a second step. In certain embodiments, all or some of the desires may be predetermined by the driver or by the owner of the vehicle, for example the identity of the chain of fuel stations that is to be chosen as a first preference for refuelling due to a discount that has been agreed, etc. Such predetermined desires may in certain embodiments be stored and retrieved from a memory in the navigation unit 120 according to certain embodiments, or through a network connection from an external unit. One purpose of this, i.e. the introduction of points of interest, may be to filter the number of points of interest that are displayed on the display 130; there is otherwise a risk that the display overflows with illustrated points of interest when travelling through an urban area or similar.

Furthermore, desires can, in certain embodiments, be collected fully or partially from sensors in the vehicle, rather than from the input of the driver or from another person involved with the vehicle. This can be valid when, for example, a sensor in a fuel tank indicates that it will soon be necessary to refuel the vehicle. The desire can then come to comprise a fuel station without the driver explicitly needing to specify this, according to certain embodiments. A corresponding situation may be the case also for, for example, air pressure in the tyres of the vehicle, which can be sensed by a sensor during driving, or the level of windscreen washer fluid or similar.

Measurement results can be transmitted from the relevant sensor to the navigation unit 120, either as replies to a request transmitted from the navigation unit 120 or at a certain interval of time according to different embodiments, such as, for example, once a second, minute, 15 minutes, 30 minutes, hour, or other similar interval comprising a multiple of these intervals of time multiplied by a freely chosen positive integer.

In a third step, which of itself may be carried out as a first step according to certain embodiments, information is collected with respect to the remaining duration of driving, calculated from the most recent interruption for service of the vehicle, from a time-mileage recorder 110 in the vehicle 100. This can be carried out through transmitting an enquiry from the navigation unit 120 to the time-mileage recorder 110, for example continuously or with a certain periodicity, such as, for example, once in 15 minutes, 30 minutes, an hour, every other hour, every third hour, or other similar interval. The time-mileage recorder 110 can in certain embodiments be triggered to transmit such information with respect to the remaining duration of driving for the driver, or when the driver specifies or updates the desires of the driver using the input unit 135.

In parallel with this, the time-mileage recorder 110 measures the duration of driving that has passed when the journey of the vehicle is started or resumed after an interruption in driving, and can calculate, based on this, the remaining duration of driving to the subsequent interruption in driving. The permitted duration of driving may differ between different countries or between, for example, different contracts for different hauliers. This permitted duration of driving can, therefore, be, for example, entered into and stored in a memory in the time-mileage recorder 110 according to certain embodiments. Such a calculation of the remaining duration of driving can thus comprise that the collected duration of driving that has passed is subtracted from the entered or stored permitted duration of driving between interruptions in driving, according to certain embodiments. Once the duration of driving that remains until the next interruption in driving has been calculated, based on the maximum permitted duration of driving for the driver expiring, it is determined which geographical region 120 that it is possible to reach during the calculated remaining duration of driving. This calculation is carried out in the navigation unit 120.

During this calculation, according to certain embodiments, a longest remaining distance or farthest distant point for the geographical region 220 can first be determined by, for example, estimating how far the vehicle 100 will travel during the remaining duration of driving based on the expected speed of the vehicle and the remaining duration of driving, and subsequently calculating a limit for the geographical region 220, at a distance from the calculated longest remaining distance in a direction that is opposite to the direction 105 of travel of the vehicle. In another example, the speed of the vehicle can be estimated during the section of road in front of the vehicle in its direction 105 of travel and this can be multiplied by the calculated remaining duration of driving. A limit for the geographical region 220 can subsequently be calculated, at a distance from the calculated most distance point. This distance from the calculated most distant point may be predetermined to be a certain size measured in kilometres, or in another corresponding local unit of length such as miles, or as a percentage of the distance of remaining journey in front of the vehicle according to different embodiments. In order to calculate how far the vehicle 100 can travel during the remaining duration of driving, information about several details of the map and about the vehicle may be used, such as, for example, limitations on the lorry or vehicle configuration, according to certain embodiments. This calculation of how far the vehicle 100 can travel during the remaining duration of driving can be carried out also in a dynamic manner and it can be recalculated and updated as the remaining duration of driving gradually decreases. A more reliable prediction can be made in this way of how far the vehicle 100 can travel before the remaining duration of driving before the interruption in driving expires.

This estimated speed of the vehicle 100 can be estimated, partly based on the current speed of the vehicle read from a speed monitor or from GPS reading, and partly based on information that is available with respect to the section of road in front of the vehicle such as speed limitations, traffic jams, temporary traffic obstructions, slippery roads, roadworks, impaired vision, fog, snow, traffic accident, etc. Such information can be collected fully or partially from, for example, at least one of an information database and a positioning system such as a global positioning system (GPS), Galileo Global Navigation Satellite System (GNSS), GLObalnaja NAvigatsionnaja Sputnikovaja Sistema (GLONASS) or similar, which makes it possible to determine the current position of the vehicle in terms of latitude, longitude and altitude. Furthermore, section of road of the route, topographic driving conditions and similar can be determined, which can influence the calculation of distance that it is possible to drive during the remaining duration of driving according to certain embodiments.

When the said geographical region 220 has been determined, a summary of the points of interest 210 that are present within this geographical region 220 can be determined. Furthermore, the degree of match between the range of services available at these points of interest 210 within the geographical region 220 and the collected desires can be carried out.

The points of interest 210 within the geographical region 220 that satisfy the desires posed are subsequently selected and presented to the driver, for example on the display 130. The driver himself or herself can subsequently reach a decision about which place is to be chosen for the next interruption in driving, for example by comparing the ranges of services available at the points of interest 210 that have been presented, or alternatively, when for example none of the points of interest 210 satisfies the said desires, the geographical region 220 can be extended or the driver can be given the opportunity to modify his or her desires. In a further embodiment, when none of the points of interest 210 that satisfies the desires can be discovered within the geographical region 220, one or several other points of interest 210 can be presented to the driver, which points of interest nearly, or at least partially, satisfy the desires of the driver. In certain embodiments an indication can be made, for example, with colour labelling, such that points of interest 210 that fully satisfy the desires of the driver are marked on the display 130 with green colouring, points of interest 210 that partially satisfy the desires of the driver are marked with yellow colouring, and points of interest 210 that are not in any way in accordance with the desires of the driver but that lie within the geographical region 220 can be marked with red colouring, in certain embodiments.

In certain forms, a point of interest 210 that satisfies the desires that have been posed but that lies outside of the geographical region can be shown, for example the final rest facility that is calculated to be reached before the remaining permitted duration of driving expires, even if this lies outside of the geographical region 220. The driver may then choose one of the suggested points of interest for interruptions in driving and confirm this point of interest as an intermediate goal in the navigation unit 120 of the vehicle.

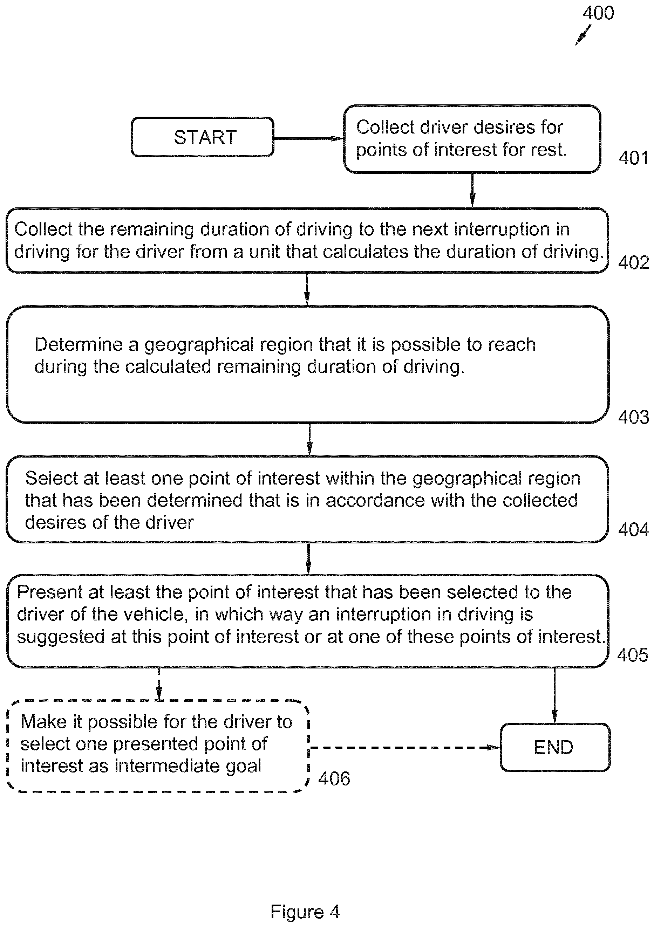

**Figure 4** illustrates an example of an embodiment of the invention. The flow diagram in Figure 4 reveals a method **400** in a navigation unit 120 in a vehicle 100 for the planning of at least one of interruptions in driving for the driver and interruptions for service of the vehicle 100 at a point of interest 210. The term "interruption in driving" is here used to denote for example a break, relaxation, rest, sleep, weekly rest or similar for the driver.

In certain embodiments when the vehicle 100 has more than one driver, the method 400 comprises an adaptation of planned interruptions for service of the vehicle such that change of driver is made possible when the calculated duration of driving for a particular driver expires. The non-driving driver can then enjoy the interruption in driving fully or partially as passenger according to certain embodiments.

The vehicle 100 comprises a navigation unit 120 installed in the vehicle 100 and arranged to collect, summarise and illustrate navigation information. This navigation information can be collected, according to certain embodiments, from at least one of sensors and other units in the vehicle 100.

The navigation information can comprise, according to certain embodiments, for example map data, starting point, points of interest, route, information from at least one sensor of the vehicle 100, or similar.

The purpose of the method 400 is to make possible the planning of interruptions in driving such that the coincide with a point of interest 210 that is in accordance with either or both of the desires of the driver and the requirements of the vehicle for service or maintenance.

In order to be able to make possible the planning of interruptions in driving in a correct manner, the method 400 may comprise a number of steps **401-406.** It should, however, be observed that the steps 401-406 described can be carried out in a somewhat different chronological order than that suggested by the numbering, and that certain of the steps can be carried out in parallel with each other, according to different embodiments. Furthermore, certain steps are carried out only in certain embodiments of the invention. The method 400 comprises the following steps:

### Step 401

Desires with respect to points of interest 210 for interruptions in driving are collected to the navigation unit 120.

Such desires with respect to points of interest 210 for rests can, according to certain embodiments, concern a desire from the driver of the vehicle and involve filtering the number of putative points of interest 210 that can be selected. Furthermore, such desires may concern, for example, the range of services available at the point of interest 210 such as access to a restaurant, cafeteria, fuel station, vehicle repair workshop, long-term parking, network connection, kiosk, lorry-washing facility, and similar.

Desires with respect to points of interest 210 may comprise several desires, or a certain combination of desires. Such desires may be stored in a memory in, for example, the vehicle 100 or in the driver card, and may be valid only for the next interruption in driving or for all future interruptions in driving according to different embodiments.

In certain variants of the invention, the desires have been posed by the owner of the vehicle, by the driver, by the employer of the driver, or by several involved parties. For example, such desires can be made or input to the navigation unit 120 through an input arrangement 135.

### Step 402

The remaining duration of driving to the next interruption in driving for the driver is collected from a unit 110 in the vehicle 100 that calculates the duration of driving. The unit 110 that calculates the duration of driving may be constituted by a time-mileage recorder.

The transfer of the remaining duration of driving from the unit 110 that calculates the duration of driving to the navigation unit 120 may in certain embodiments be carried out over a wireless interface, based, for example, on any one of the following technologies: Global System for Mobile Communications (GSM), Enhanced Data Rates for GSM Evolution. (EDGE), Universal Mobile Telecommunications System (UMTS), Code Division Access (CDMA), (CDMA 2000), Time Division Synchronous CDMA (TD-SCDMA), Long Term Evolution. (LTE); Wireless Fidelity (Wi-Fi), as defined by any one the Institute of Electrical and Electronics Engineers (IEEE) standards 802.11 a, ac, b, g and n, Internet Protocol (IP), Bluetooth, and Near Field Communication, (NFC).

The transfer may in certain embodiments be carried out over a wired interface. Such a wired interface may, for example, be based on any one of the following technologies in the vehicle 100: Controller Area Network (CAN), Media Oriented Systems Transport (MOST), Ethernet, or outside of the vehicle 100: Ethernet, Universal Serial Bus (USB), Serial RS232, FireWire, Thunderbolt.

According to certain embodiments, the transfer of the remaining duration of driving may be carried out continuously, at, for example, at least one of a certain interval of time, and when a triggering event occurs, such as, for example, when the vehicle 100 is started.

Through transferring continuously the remaining duration of driving it is possible to reduce the risk that the driver exceeds the permitted duration of driving. Furthermore, the accuracy of the prediction of the geographical region can be improved.

### Step 403

A geographical region 220 is determined that it is possible to reach during the remaining duration of driving that has been collected 402 .

According to certain embodiments, the determination of the geographical region 220 can be carried out by first calculating a farthest distant point for the geographical region 220 by calculating a longest remaining distance for the geographical region 220 by estimating how far the vehicle 100 will travel during the remaining duration of driving based on the expected speed of the vehicle and the remaining duration of driving, and subsequently calculating a limit for the geographical region 220, at a distance from the calculated longest remaining distance in a direction that is opposite to the direction 105 of travel of the vehicle.

This distance may be, in different embodiments, for example one kilometre, five kilometres, ten kilometres, or a freely chosen multiple of any one of these, according to different embodiments.

Furthermore, in order to calculate how far the vehicle 100 can travel during the remaining duration of driving, information about several details of the map and about the vehicle, for example, may be used, such as, for example, limitations on the lorry or vehicle configuration, according to certain embodiments. This calculation of how far the vehicle 100 can travel during the remaining duration of driving can be carried out also in a dynamic manner and it can be recalculated and updated as the remaining duration of driving gradually decreases. A more reliable prediction can be made in this way of how far the vehicle 100 can travel before interruption for service of the vehicle.

According to certain embodiments, the navigation unit 120 can collect information about the remaining duration of driving continuously, and recalculate possible points of interest 210 for interruptions in driving. If the new calculation gives a result that differs from the previous calculation, the calculated maximum distance that can be travelled during the remaining duration of driving may be recalculated.

### Step 404

At least two points of interest 210 within the geographical region 220 that has been determined 403 and that is in accordance with the collected 401 desires are subsequently selected by the navigation unit 120.

In certain embodiments, several points of interest 210 within the geographical region 220 that has been determined 403 are selected.

If no points of interest 210 are present, i.e. if there are no rest facilities or locations to take a break present within the specified geographical region 220 that satisfy the collected desires, the navigation unit 120 may, in certain embodiments, present the last possible rest facility or location to take a break that is located on the route before the remaining duration of driving is exceeded, even if this lies outside of the geographical region that has been determined 404.

### Step 405

At least two points of interest 210 that have been selected 404 are presented to the driver of the vehicle, and in this way an interruption in driving is suggested at these points of interest 210.

Such a presentation is carried out on a display 130 associated with the navigation unit 120. Several points of interest 210 within the geographical region 220 that has been determined 403 are selected 404 and presented for the driver, who is given in this way the information required to select a location for an interruption in driving.

The presentation may be made, for example, on a map or in the form of a list on a display 130, according to certain embodiments.

In certain embodiments, the suggested points of interest 210, i.e. at least one of rest facilities and locations to take a break, are presented also on a map on the display 130, in which case it is shown as, for example, icons or similar symbols. The presentation may also comprise the calculated maximum distance that it is possible to reach within the remaining duration of driving, according to certain embodiments. This can be presented, for example, to the driver on a map on a display 130 such that it is made clear how far it is possible to reach. This marking may be a line, a flag, or another similar type of marking. The marking may be dynamic, as also the calculation of this longest distance, and may in this way be continuously updated, or updated at a certain interval of time, such that the marking can be moved when an update of this calculated longest distance is made.

According to certain embodiments, the navigation unit 120 can collect information about the remaining duration of driving continuously, and recalculate possible points of interest 210 for interruptions in driving. If the new calculation gives a different result than that given by the previous calculation, a new presentation of possible rest facilities and locations to take a break may be made.

### Step 406

One of the points of interest 210 that have been presented is determined as an intermediate goal in the navigation unit 120, when the driver selects this point of interest 210 for an interruption in driving.

If a continuous recalculation gives a result that differs from the result of the previous calculation of maximum distance, a new presentation of possible rest facilities and locations to take a break for interruptions in driving may be made and the driver given the opportunity to select a new intermediate goal.

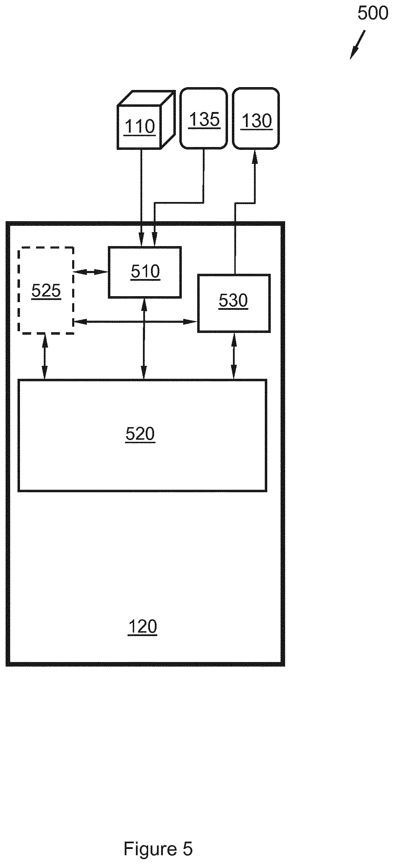

**Figure 5** illustrates an embodiment of a system **500** comprising a navigation unit 120 in a vehicle 100, for the planning interruptions in driving for the driver and of interruptions for service of the vehicle 100 at a point of interest 210.

The navigation unit 120 is configured to carry out at least certain of the previously described method steps 401-406, comprised in the description of the method 400 for the planning of at least one of interruptions in driving and interruptions for service of the vehicle.

In order to be able to plan interruptions in driving in a correct manner, the navigation unit 120 contains a number of components that will be described in more detail in the following text. Certain of the units and components described are present in some, but not necessarily all, embodiments. Also additional electronic circuits may be present in the navigation unit 120 that are not fully necessary to understand the method 400 according to the steps 401-406 described above. Such additional electronic circuits have been omitted from Figure 5 for reasons for clarity in order not to make the understanding of the invention unnecessarily difficult.

The navigation unit 120 comprises a receiver **510** arranged to collect desires with respect to points of interest 210 for interruptions in driving, and arranged to collect the duration of driving that remains from a unit 110 that calculates the duration of driving, such as a time-mileage recorder, in the vehicle 100. This may take place over a wireless or wired interface, according to certain embodiments.

The receiver 510 may be also arranged to collect desires that concern the range of services available at the point of interest 210 such as access to a restaurant, cafeteria, fuel station, vehicle repair workshop, long-term parking, network connection, kiosk, lorry-washing facility or similar through presenting different potential desires on the display 130 and collecting a selection of these, for example by input at an input unit 135.

Furthermore, the navigation unit 120 comprises a processor circuit **520,** arranged to determine a geographical region 220 that it is possible to reach during the remaining duration of driving that has been collected. The processor circuit 520 is arranged also to select one point of interest 210 within the geographical region 220 that has been determined that is in accordance with the collected desires. The processor circuit 520 may be constituted by, for example, one or several central processing units (CPUs), microprocessors or other logic circuits designed to interpret and carry out instructions and/or to read and write data. The processor circuit 520 can handle data for the input flow, output flow or data processing of data comprising also the buffering of data, control functions and similar.

The processor circuit 520 is further arranged to determine one of the points of interest 210 that have been presented as an intermediate goal in the navigation unit 120, when the driver selects this point of interest 210 for an interruption in driving.

In certain embodiments, the processor circuit 520 may be arranged also to determine the geographical region 220, by first calculating a longest remaining distance for the geographical region 220 by estimating how far the vehicle 100 will travel during the remaining duration of driving based on the expected speed of the vehicle and the remaining duration of driving, and subsequently calculating a limit for the geographical region 220, at a distance from the calculated longest remaining distance in a direction that is opposite to the direction 105 of travel of the vehicle.

Furthermore, the navigation unit 120 comprises also a display 130 arranged to present the points of interest 210 to the driver of the vehicle, and in this way to suggest interruptions in driving at these points of interest 210.

The display 130 may also be referred to as a computer screen, display or monitor, which is an output unit arranged to display text or an image that has been created electronically. Furthermore, the display 130 may comprise a screen with a cathode ray tube, known as a "CRT", in certain embodiments. In other embodiments, such a display may have the form of liquid crystal displays (LCDs), plasma displays, an SED (Surface-conduction electron-emitter display) or an OLED (Organic light-emitting diode) display, or a Thin Film Transistor (TFT) display, to name some different examples pf displays. The display 130 may also be sensitive to touch and may be constituted by what is known as a "touch-sensitive screen", which may function also as an input unit 135.

The navigation unit 120 in certain embodiments may comprise a memory unit **525.** This memory 525 may be arranged to store collected desires with respect to the range of services available at an interruption in driving, in certain embodiments of the invention.

The memory unit 525 in the navigation unit 120 may in certain embodiments be constituted by a medium for the storage of data. The memory unit 525 may be constituted by, for example, a memory card, flash memory, a USB memory, a harddisk or other similar data storage unit, for example, any member of the group: ROM (Read-Only Memory), PROM (Programmable Read-Only Memory), EPROM (Erasable PROM), Flash memory, EEPROM (Electrically Erasable PROM), etc., in different embodiments.

The navigation unit 120 comprises also in certain forms a transfer means **530.** Such a transfer means 530 is arranged for the transfer of information related to the vehicle 100 to the display 130. Such transfer can be carried out over a wireless or wired interface according to different forms, as has previously been discussed.

Furthermore, the invention comprises a computer program in a navigation unit 120, installed in a vehicle 100 for the planning of interruptions in driving for the driver and interruptions for service of the vehicle 100. The program is arranged to carry out the method 400 according to at least one of the previously described steps 401-406, when the program is executed in a processor circuit 520 in the navigation unit 120.

The method 400 according to the steps 401-406 for the planning of interruptions in driving for the driver and interruptions for service of the vehicle 100 can be implemented through one or several processor circuits 520 in the navigation unit 120 together with computer program code to carry out any one, some, certain of, or all of the steps 401-406 that have been described above. A computer program comprising instructions to carry out the steps 401-406 can in this way be executed when the program is loaded into the processor circuit 520.

The receiver 510 and the transfer means 530 described and discussed above can, in certain embodiments, be constituted by separate transmitters and receivers. The receiver 510 and the transfer means 530 in the navigation unit 120, however, can in certain embodiments be constituted by a transceiver that is adapted to transmit and to receive radio signals, and where parts of the construction, for example the aerial, are common for the transmitter and the receiver. The said communication may be adapted for the wireless transfer of information over radio waves, WLAN, Bluetooth, or an infrared transmitter/receiver module. At least one of the receiver 510 and the transfer means 530 may in certain embodiments, however, be specially adapted for the wired exchange of information.

All embodiments of the invention include also a system 500 in a vehicle 100 for the planning of interruptions in driving for the driver and interruptions for service of the vehicle 100 at a point of interest 210.

The system 500 comprises a unit 110 that calculates the duration of driving, for example a time-mileage recorder, arranged to calculate the duration of driving that has passed, calculated from the most recent rest, and the remaining permitted duration of driving to the next interruption in driving. The system 500 comprises also a navigation unit 120 arranged to carry out the method 400 according to at least any one of the steps 401-406.

The system 500 may further comprise an input unit 135 arranged to receive desires with respect to the range of services available at interruptions in driving.

Certain embodiments of the invention include also a vehicle 100 that comprises a system 500 for the planning of interruptions in driving for the driver and interruptions for service of the vehicle 100 at a point of interest 210.

According to certain alternative embodiments, the navigation unit 120 in the vehicle 100 comprises also, or can be connected to, a unit to determine geographical position, such as a GPS module. This alternative unit is specially adapted to determine the current position of the vehicle, and it makes possible, for example, a storage or labelling in order to mark the position of the vehicle 100. The invention is not in any way limited to the embodiments that have been described: it can be freely varied within the scope of the patent claims.

## Claims

1. A method (400) in a navigation unit (120) for planning interruptions in driving of a vehicle (100), at a point of interest (210), wherein the interruptions are according to requirements of authorities, industry bodies, and/or employer policies with respect to maximum permitted durations of driving and wherein the interruptions in driving comprise relaxation, rest or sleep for a driver of the vehicle, whereby the method (400) comprises:
collection (401) of desires with respect to points of interest (210) for the interruption in driving,
collection (402) of a remaining duration of driving to the next interruption in driving for the driver from a unit (110) that calculates the remaining duration of driving in the vehicle (100) on the basis of the maximum permitted durations of driving, wherein the unit is constituted by a time-mileage recorder of the vehicle,
determination (403) of a geographical region (220) that it is possible to reach during the collected (402) remaining duration of driving,
selection (404) of points of interest (210) that are in accordance with the collected desires within the geographical region (220),
presentation (405) of the selected points of interest (210) and of the geographical region (220) that can be reached within the remaining permitted duration of driving for the driver, to the driver of the vehicle, in which way interruptions in driving can be suggested at the points of interest (210), and
determination (406) of one of the points of interest (210) that have been presented (405) as an intermediate goal in the navigation unit (120), when the driver selects this point of interest for the interruption in driving.

2. The method (400) according to claim 1, wherein the desires with respect to points of interest (210) for interruptions in driving concern desires of the driver of the vehicle and involve filtering of the number of putative points of interest (210) that may be selected (404).

3. The method (400) according to claim 1 or 2, where the desires concern the range of services available at the point of interest (210), wherein the range of services comprises at least one of access to a restaurant, cafeteria, fuel station, vehicle repair workshop, long-term parking, network connection, kiosk, and lorry-washing facility.

4. The method (400) according to any one of claims 1-3, further comprising that, when the vehicle (100) has more than one driver, an adaptation of a planned interruption for service of the vehicle is made such that change of driver is made possible when the calculated duration of driving for a particular driver expires.

5. A navigation unit (120) for planning interruptions in driving of a vehicle (100) at a point of interest (210), wherein the interruptions are according to requirements of authorities, industry bodies, and/or employer policies with respect to maximum permitted durations of driving and wherein the interruptions in driving comprise relaxation, rest or sleep for a driver of the vehicle, whereby the navigation unit (120) comprises:
a receiver (510) arranged to collect desires with respect to points of interest (210) for interruptions in driving, and arranged to collect the duration of driving that remains to the subsequent interruption in driving from a unit (110) in the vehicle (100) that calculates the remaining duration of driving on the basis of the maximum permitted durations of driving, wherein the unit is constituted by a time-mileage recorder of the vehicle,
a processor circuit (520) arranged to determine a geographical region (220) that it is possible to reach during the remaining duration of driving, and arranged also to select points of interest (210) that are in accordance with the collected desires within the geographical region (220) that has been determined, and arranged also to determine one of the points of interest (210) that have been presented as an intermediate goal in the navigation unit (120), when the driver selects this point of interest for the interruption in driving, and
a display unit (130), arranged to present the selected points of interest (210) for the driver of the vehicle and the geographical region (220) that can be reached within the remaining permitted duration of driving for the driver and in this way to suggest an interruption in driving at these points of interest (210).

6. The navigation unit (120) according to claim 5, where
the receiver (510) is arranged to collect desires that concern the range of services available at the point of interest (210), wherein the range of services comprises at least one of access to a restaurant, cafeteria, fuel station, vehicle repair workshop, long-term parking, network connection, kiosk and lorry-washing facility, through presenting different potential desires on the display (130) and collecting a selection of these, and where the navigation unit (120) further comprises
a memory (525) in order to store collected desires with respect to the range of services available at interruptions in driving.

7. A computer program in a navigation unit (120) according to any one of claims 5-6, for planning of interruptions in driving of a vehicle (100) comprising relaxation, rest or sleep for its driver at a point of interest (210), whereby the computer program is arranged to carry out the method (400) according to any one of claims 1-4 when the computer program is executed in a processor circuit (520) in the navigation unit (120).

8. A system (500) in a vehicle (100) for planning of interruptions in driving of a vehicle (100) comprising relaxation, rest or sleep for its driver at a point of interest (210), whereby the system (500) comprises:
a unit (110) that calculates a remaining duration of driving on the basis of maximum permitted durations of driving according to requirements of authorities, industry bodies, and/or employer policies, wherein the unit is constituted by the time-mileage recorder of the vehicle, arranged to calculate the remaining duration of driving to the next interruption in driving for the driver,
a navigation unit (120) according to any one of claims 5-6.

9. The system (500) according to claim 8, further comprising:
an input unit (135) arranged to receive desires with respect to the range of services available at interruptions in driving.

10. A vehicle (100) comprising a system (500) according to any one of claims 8-9.

## Patentansprüche

1. Verfahren (400) in einer Navigationseinheit (120) zur Planung von Unterbrechungen des Lenkens eines Fahrzeugs (100) an einem Point of Interest (Interessenspunkt) (210), wobei die Unterbrechungen den Anforderungen von Behörden, Industriegremien und/oder der Betriebspolitik hinsichtlich der maximal zulässigen Lenkzeiten entsprechen, und wobei die Fahrtunterbrechungen Entspannung, Ruhe oder Schlaf für einen Fahrer des Fahrzeugs aufweisen, wobei das Verfahren (400) aufweist:
Erfassung (401) von Wünschen bezüglich der Points of Interest (210) für die Fahrtunterbrechung,
Erfassung (402) einer verbleibenden Lenkzeit zur nächsten Fahrtunterbrechung für den Fahrer durch eine Einheit (110) im Fahrzeug (100), die die verbleibende Lenkzeit auf Basis der maximal zulässigen Lenkzeiten berechnet, wobei die Einheit ein Zeit-Meilen-Schreiber des Fahrzeugs ist,
Bestimmung (403) einer geographischen Zone (220), die während der erfassten (402) verbleibenden Lenkzeit erreicht werden kann,
Wahl (404) von Points of Interest (210), die mit den erfassten Wünschen innerhalb der geographischen Zone (220) übereinstimmen,
Präsentation (405) der gewählten Points of Interest (210) und der geographischen Zone (220), die in der für den Fahrer verbleibenden zulässigen Lenkzeit erreicht werden können, für den Fahrer des Fahrzeugs, wobei auf diese Weise Fahrtunterbrechungen an den Points of Interest (210) vorgeschlagen werden können, und
Bestimmung (406) eines der als ein Zwischenziel in der Navigationseinheit (120) präsentierten (405) Points of Interest (210), wenn der Fahrer diesen Point of Interest (210) für die Fahrtunterbrechung wählt.

2. Verfahren (400) nach Anspruch 1, wobei die Wünsche bezüglich der Points of Interest (210) für die Fahrtunterbrechungen Wünsche des Fahrers des Fahrzeugs betreffen, und das Filtern der Anzahl irrtümlicher Points of Interest (210) beinhalten, die gewählt (404) werden können.

3. Verfahren (400) nach Anspruch 1 oder 2, wobei die Wünsche das verfügbare Leistungsangebot am Point of Interest (210) betreffen, wobei das Leistungsangebot mindestens entweder den Zugang zu einem Restaurant, einer Cafeteria, einer Tankstelle, einer Kfz-Reparaturwerkstatt, Dauerparkplätzen, Netzanschluss, einem Kiosk oder einer Lkw-Waschanlage aufweist.

4. Verfahren (400) nach einem der Ansprüche 1 bis 3, ferner aufweisend, dass dann, wenn das Fahrzeug (100) mehr als einen Fahrer hat, eine Anpassung einer geplanten Unterbrechung für eine Fahrzeugwartung so erfolgt, dass ein Fahrerwechsel möglich ist, wenn die berechnete Lenkzeit eines bestimmten Fahrers abläuft.

5. Navigationseinheit (120) zur Planung von Unterbrechungen des Lenkens eines Fahrzeugs (100) an einem Point of Interest (210), wobei die Unterbrechungen den Anforderungen von Behörden, Industriegremien und/oder der Betriebspolitik hinsichtlich der maximal zulässigen Lenkzeiten entsprechen, und wobei die Fahrtunterbrechungen Entspannung, Ruhe oder Schlaf für einen Fahrer des Fahrzeugs aufweisen, wobei die Navigationseinheit (120) aufweist:
einen Empfänger (510), der zur Erfassung von Wünschen bezüglich eines Points of Interest (210) für die Fahrtunterbrechungen und zur Erfassung der verbleibenden Lenkzeit bis zur nächsten Fahrtunterbrechung von einer Einheit (110) im Fahrzeug (100), die die verbleibende Lenkzeit auf Basis der maximal zulässigen Lenkzeiten berechnet, konfiguriert ist, wobei die Einheit ein Zeit-Meilen-Schreiber des Fahrzeugs ist,
eine Prozessorschaltung (520), die zur Bestimmung einer geographischen Zone (220) konfiguriert ist, die während der verbleibenden Lenkzeit erreicht werden kann, und die außerdem konfiguriert ist, Points of Interest (210) zu wählen, die den erfassten Wünschen entsprechen, die innerhalb der geographischen Zone (220) bestimmt worden sind, und die außerdem konfiguriert ist, einen der Points of Interest (210) zu bestimmen, der als ein Zwischenziel in der Navigationseinheit (120) präsentiert worden ist, wenn der Fahrer diesen Point of Interest (210) für die Fahrtunterbrechung wählt, und
eine Anzeigeeinheit (130), die zur Präsentation der gewählten Points of Interest (210) für den Fahrer des Fahrzeugs und der geographischen Zone (220), die innerhalb der für den Fahrer verbleibenden Lenkzeit erreicht werden kann, konfiguriert ist, um auf diese Weise eine Fahrtunterbrechung an diesen Points of Interest (210) vorzuschlagen.

6. Navigationseinheit (120) nach Anspruch 5, wobei
der Empfänger (510) konfiguriert ist, die Wünsche zu erfassen, die das verfügbare Leistungsangebot am Point of Interest (210) betreffen, wobei das Leistungsangebot mindestens entweder den Zugang zu einem Restaurant, einer Cafeteria, einer Tankstelle, einer Kfz-Reparaturwerkstatt, Dauerparkplätzen, Netzanschluss, einem Kiosk oder einer Lkw-Waschanlage aufweist, indem er verschiedene potentielle Wünsche auf der Anzeige (130) präsentiert und eine Auswahl derselben erfasst, und wobei die Navigationseinheit (120) ferner aufweist
einen Speicher (525) zum Speichern der erfassten Wünsche bezüglich des verfügbaren Leistungsangebots an Fahrtunterbrechungen.

7. Computerprogramm in einer Navigationseinheit (120) nach einem der Ansprüche 5 bis 6 zur Planung von Unterbrechungen des Fahrens eines Fahrzeugs (100), die Entspannung, Ruhe oder Schlaf für dessen Fahrer an einem Point of Interest (210) aufweisen, wobei das Computerprogramm zur Ausführung des Verfahrens (400) nach einem der Ansprüche 1 bis 4 konfiguriert ist, wenn das Computerprogramm in einer Prozessorschaltung (520) der Navigationseinheit (120) ausgeführt wird.

8. System (500) in einem Fahrzeug (100) zur Planung von Unterbrechungen des Fahrens eines Fahrzeugs (100), die Entspannung, Ruhe oder Schlaf für dessen Fahrer an einem Point of Interest (210) aufweisen, wobei das System (500) aufweist:
eine Einheit (110), die eine verbleibende Lenkzeit des Fahrzeugs (100) auf Basis der maximal zulässigen Lenkzeiten gemäß den Anforderungen von Behörden, Industriegremien und/oder der Betriebspolitik berechnet, wobei die Einheit der Zeit-Meilen-Schreiber des Fahrzeugs ist, der zur Berechnung der verbleibenden Lenkzeit bis zur nächsten Fahrtunterbrechung für den Fahrer konfiguriert ist,
eine Navigationseinheit (120) nach einem der Ansprüche 5 bis 6.

9. System (500) nach Anspruch 8, ferner aufweisend:
eine Eingabeeinheit (135), die zum Empfangen von Wünschen bezüglich des bei Fahrtunterbrechungen verfügbaren Leistungsangebots konfiguriert ist.

10. Fahrzeug (100), das ein System (500) nach einem der Ansprüche 8 bis 9 aufweist.

## Revendications

1. Procédé (400) dans une unité de navigation (120) destiné à planifier des interruptions de conduite d'un véhicule (100), à un point d'intérêt (210), dans lequel les interruptions respectent les exigences des autorités, des organismes de l'industrie et/ou des politiques de l'employeur relatives aux durées maximales autorisées de conduite et dans lequel les interruptions de conduite comprennent de la détente, du repos ou du sommeil pour le conducteur du véhicule, ledit procédé (400) comprenant les étapes suivantes :
recueil (401) de souhaits concernant les points d'intérêt (210) pour l'interruption de conduite,
recueil (402) de la durée restante de conduite jusqu'à la prochaine interruption de conduite pour le conducteur à partir d'une unité (110) qui calcule la durée restante de conduite du véhicule (100) sur la base des durées maximales autorisées de conduite, l'unité étant constitué par un enregistreur de temps et de kilométrage du véhicule,
détermination (403) d'une région géographique (220) qu'il est possible d'atteindre pendant la durée restante de conduite recueillie (402),
choix (404) de points d'intérêt (210) conformes aux souhaits recueillis dans la région géographique (220),
présentation (405) au conducteur du véhicule des points d'intérêt (210) choisis et de la région géographique (220) qu'il est possible d'atteindre dans la durée de conduite restante autorisée pour le conducteur, de manière à ce que des interruptions de conduite puissent être proposées aux points d'intérêt (210), et
détermination (406) d'un des points d'intérêt (210) qui ont été présentés (405) comme objectif intermédiaire dans l'unité de navigation (120), lorsque le conducteur choisit ce point d'intérêt pour l'interruption de conduite.

2. Procédé (400) selon la revendication 1, dans lequel les souhaits relatifs aux points d'intérêt (210) pour des interruptions de conduite représentent les souhaits du conducteur du véhicule et impliquent le filtrage des points d'intérêt (210) éventuels qui peuvent être choisis (404).

3. Procédé (400) selon la revendication 1 ou 2, où les souhaits concernent la gamme de services disponibles au point d'intérêt (210), la gamme de services comprenant au moins un élément parmi l'accès à un restaurant, une cafétéria, une station-service, un garage, un stationnement longue durée, une connexion réseau, un kiosque et une station de lavage de poids lourds.

4. Procédé (400) selon l'une quelconque des revendications 1 à 3, comprenant en outre le fait que, lorsque le véhicule (100) a plus d'un conducteur, une interruption planifiée pour l'entretien du véhicule est adaptée de telle sorte que le changement de conducteur soit rendu possible lorsque la durée calculée de conduite pour un conducteur particulier arrive à son terme.

5. Unité de navigation (120) destinée à planifier des interruptions de conduite d'un véhicule (100) à un point d'intérêt (210), les interruptions respectant les exigences des autorités, des organismes de l'industrie et/ou des politiques de l'employeur relatives aux durées maximales autorisées de conduite et les interruptions de conduite comprenant de la détente, du repos ou du sommeil pour le conducteur du véhicule, ladite unité de navigation (120) comprenant :
un récepteur (510) conçu pour recueillir des souhaits concernant des points d'intérêt (210) pour des interruptions de conduite et pour recueillir la durée de conduite restante jusqu'à la prochaine interruption de conduite à partir d'une unité (110) dans le véhicule (100) qui calcule la durée restante de conduite sur la base des durées maximales autorisées, l'unité étant constituée d'un enregistreur de temps et de kilométrage du véhicule,
un circuit de processeur (520) conçu pour déterminer une région géographique 25 (220) qu'il est possible d'atteindre pendant la durée restante de conduite, et également conçu pour choisir des points d'intérêt (210) conformes aux souhaits recueillis dans la région géographique (220) qui a été déterminée, mais également conçu pour déterminer l'un des points d'intérêt (210) qui ont été présentés comme objectif intermédiaire dans l'unité de navigation (120), lorsque le conducteur choisit ce point d'intérêt pour l'interruption de conduite, et
une unité d'affichage (130), conçue pour présenter les points d'intérêt choisis (210) pour le conducteur du véhicule et la région géographique (220) qui peuvent être atteints pendant la durée de conduite restante autorisée pour le conducteur et permettant ainsi de proposer une interruption de conduite à ces points d'intérêt (210).

6. Unité de navigation (120) selon la revendication 5, où le récepteur (510) est conçu pour recueillir des souhaits concernant la gamme de services disponibles au point d'intérêt (210), la gamme de services comprenant au moins un élément parmi l'accès à un restaurant, une cafétéria, une station-service, un garage, un stationnement durée, une connexion réseau, un kiosque et une station de lavage de poids lourds, en indiquant différents souhaits potentiels sur l'affichage (130) et en recueillant une sélection de ceux-ci, et où l'unité de navigation (120) comprend en outre
une mémoire (525) pour la sauvegarde des souhaits recueillis concernant la gamme de services disponibles en cas d'interruption de conduite.

7. Programme informatique dans une unité de navigation (120) selon l'une quelconque des revendications 5 et 6, destinée à planifier des interruptions de conduite d'un véhicule (100) comprenant de la détente, du repos ou du sommeil pour le conducteur à un point d'intérêt (210), ledit programme informatique étant conçu pour la mise en oeuvre du procédé (400) selon l'une quelconque des revendications 1 à 4 lorsque le programme informatique est exécuté dans un circuit de processeur (520) dans l'unité de navigation (120).

8. Système (500) dans un véhicule (100) destiné à planifier des interruptions de conduite d'un véhicule (100) comprenant de la détente, du repos ou du sommeil pour le conducteur à un point d'intérêt (210), ledit système (500) comprenant :
une unité (110) qui calcule une durée de conduite restante sur la base des durées de conduite maximales autorisées conformément aux exigences des autorités, des organismes de l'industrie et/ou des politiques de l'employeur, l'unité étant constituée par
un enregistreur de temps et de kilométrage du véhicule, conçu pour calculer la durée de conduite restante jusqu'à la prochaine interruption de conduite pour le conducteur,
une unité de navigation (120) selon l'une quelconque des revendications 5 et 6.

9. Système (500) selon la revendication 8, comprenant en outre :
une unité d'entrée (135) conçue pour recevoir des souhaits concernant la gamme de services disponibles en cas d'interruption de conduite.

10. Véhicule (100) comprenant un système (500) selon l'une quelconque des revendications 8 et 9.
